# EUROPEAN PATENT SPECIFICATION

(11) **EP 3 777 286 B1**
(45) Date of publication and mention of the grant of the patent: **12.02.2025**
(21) Application number: 18718778.6
(22) Date of filing: 13.04.2018
(51) Int. Cl.: H04B 7/0491, H04B 7/08, H04W 16/24, H04B 7/024

(54) **CELL SECTOR-CLUSTERING FOR JOINT DECODING OF MESSAGES**
ZELLENSEKTOR-CLUSTERUNG FÜR DIE GEMEINSAME DECODIERUNG VON NACHRICHTEN
REGROUPEMENT DE SECTEURS DE CELLULE POUR LE DÉCODAGE CONJOINT DE MESSAGES

(43) Date of publication of application: 17.02.2021
(73) Proprietor: HUAWEI TECHNOLOGIES CO., LTD., Shenzhen, Guangdong 518129 (CN)
(72) Inventor: GELINCIK, Samet, Shenzen Guangdong 518129 (CN); WANG, Ligong, Shenzen Guangdong 518129 (CN); WIGGER, Michele, Shenzen Guangdong 518129 (CN)
(74) Representative: Roth, Sebastian
(86) International application number: PCT/EP2018/059535
(87) International publication number: WO 2019/197035

(56) References cited:
- US-A1- 2010 157 901
- US-A1- 2011 200 029
- US-A1- 2012 071 153

## Description

### TECHNICAL FIELD

The present invention relates to a decoding module for a primary base station. The present invention relates also to a sending module for a secondary base station. Further, the present invention relates to a primary base station and secondary base station including the decoding module and receiving module, respectively, and corresponding decoding and encoding methods. The present invention focuses particularly on joint decoding of messages sent from terminals located in a cluster of sectors to base stations in a mobile communication network.

### BACKGROUND

Mobile communication networks typically comprise a plurality of cells, wherein each cell is divided into a plurality of S sectors. Each cell is further served by a base station (BS), which is equipped with a plurality of *M* directional antennas, where groups of *M*/*S* antennas point in the direction of each of the sectors of the cell. A common mobile communication network has a hexagonal cell model, wherein each cell is divided into three sectors, i.e. wherein S = 3. BSs can communicate with each other over dedicated backhaul links that connect them among each other. In the uplink, this allows the BSs to exchange information about their receive signals. Exchanging such information can improve a decoding performance of decoding messages included in the receive signals, because communications in neighboring BSs interfere with each other. Access to the receive signals of multiple BSs allows increasing diversity (i.e. two looks at the same input) and thus eliminating interference.

In a quantize-and-share decoding method, some BSs quantize the receive signals, particularly messages received from terminals, in their sectors, and send the quantization information to their neighboring BSs. Decoding of the messages is performed at specific BSs of cells that are called "master cells". Specifically, each master cell collects quantization information from some of the adjacent cell sectors, and jointly decodes the messages signals in its own cell and the messages in these sectors. The decoded signals are then sent back over the backhaul links to the BSs that are interested in these messages.

A straightforward approach to incorporate such cooperative decoding between BSs is to identify master cells according to a tightest packing in the cell-layout of the network, which ensures that each master BS is surrounded by one ring of ordinary cells pertaining exclusively to this master cell. A master cell and the surrounding cells will then form a cluster. For decoding, each BS in a surrounding ring sends a quantized version of all receive signals in its plurality of sectors to the master cell, which then jointly decodes all the messages transmitted in the master cell and in the cells in the surrounding rings. The decoded messages are then sent back to their intended BSs.

In practice, however, a cooperative decoding between BSs is implemented based on an "opportunistic 3-sector decoding" rule. Specifically, to decode the messages sent at a given mobile user, one chooses three sectors opportunistically and the message is decoded based on the received signals in these three sectors. Signals pertaining to messages sent in other sectors are treated as noise. The three sectors are chosen among the set of sectors formed by the sector of the mobile user sending the message and all its adjacent sectors, with the goal to minimize the probability of a decoding error. Each decoded message is sent back to its intended BS.

A disadvantage of both the straightforward approach and the opportunistic 3-sector decoding approach implemented in practice is that a decoding performance is not optimized.

US2010157901 A1 discloses a wireless network system including a plurality of base stations each configured to manage active links to mobile stations within a range; and a controller configured to control the base stations to provide at least two of the active links from two different base stations simultaneously to a given mobile station in integral manner for joint processing.

US2012071153 A1 discloses methods proposed to address interference problems in wireless networks, with two promising methods being: Network Multi-Input-Multi-Output decoding and Multi-Cell Successive Interference Cancellation.

US2011200029 A1 discloses a method and system for identifying cell clusters within a coordinated multiple point wireless transmission network, wherein the network includes a total number of cells served by corresponding base stations and a base station controller divides the network of cells into clusters in order to reduce scheduling complexity while optimizing throughout and performance.

### SUMMARY

The invention is defined in the appended claims. Embodiments representing specific realisations of the invention are defined in the dependent claims.

In view of the above-mentioned disadvantage, the present invention aims to improve the conventional approaches for joint decoding. The present invention has the object to provide a way to further improve the decoding performance. To this end, the present invention intends to minimize the interference caused by transmissions from outside the master cell. In particular, an intention of the invention is thus to cluster sectors that yield the best decoding performance under a cooperative decoding algorithm.

The object of the present invention is achieved by the solution provided in the enclosed independent claims. Advantageous implementations of the present invention are further defined in the dependent claims. In the following, parts of the description and drawings referring to embodiments not covered by the claims, are not part of the invention, but are illustrative examples necessary for understanding the invention.

In particular the present invention proposes a new cooperative (joint) decoding algorithm at the BSs of a sectorized cellular system, in particular a system with a hexagonal cell layout. The main idea of the invention is to partition the entire network into disjoint, wind-spinner-shaped clusters of sectors, where the center cells of these clusters act as master cells. Within each wind-spinner cluster, all receive signals of sectors not pertaining to the master cell may be quantized, and are sent to the master cell which jointly decodes all messages in the sectors of this wind-spinner cluster. Interference from sectors outside the wind-spinner clusters is treated as noise. The invention has the further advantage that communication of messages over backhaul is reduced, or for an unchanged level the performance of decoding is improved.

A first aspect of the invention provides a decoding module for a primary base station in a network comprising a plurality of base stations, each base station serving a cell and each cell being partitioned into a plurality of sectors, the primary base station serving a first cell and the decoding module being configured to receive information from each of a plurality of secondary base stations each serving a respective second cell adjacent to the first cell, wherein the information is representative of at least one message originating from at least one terminal located in the respective second cell of a secondary base station in one specific sector adjacent to the first cell, and jointly decode the information sent from the secondary base stations and at least one message originating from at least one terminal located in the first cell.

Due to the selection of the specific sectors of the second cells and the sectors of the first cell, from which messages are jointly decoded by the decoding module, the interference can be reduced, and the decoding performance can thus be optimized significantly.

The information, which the decoding module is configured to jointly decode, originates from terminals located in a cluster of sectors. "Cluster" as used herein with reference to the invention may have a specific meaning, such as the cluster includes the sectors of the first cell and the specific sectors of the second cells adjacent to the first cell.

The formed cluster of sectors leads to a significant increase in decoding performance of the messages at the decoding module.

The specific sectors of the second cells in the cluster form disjoint pairs of adjacent sectors.

In other words, two specific sectors of second cells may be adjacent to each other and form a pair. However, different pairs are disjoint from another, i.e. not adjacent. That means that there are not more than two adjacent sectors of the second cells. This leads to a wind-spinner shape of the cluster in a hexagonal cell layout. The wind-spinner cluster consists of the sectors of the first cell and the different pairs of sectors of the second cells, the latter sectors forming leaf-like structures connected to the hexagonal first cell.

Although described herein as a "wind-spinner" shape, various shapes are within the scope of the invention. Wind-spinners may also be known as windmill shape, pinfoil shape or whirligig shape. Described generally such shapes may comprise leaves originating from a central point and as a three dimensional structure would catch the wind and spin, hence "wind-spinner". In some preferred embodiments, the leaves extend generally outwardly from a central area, which may coincide with a center of rotation, such that preferably the wind-spinner shape possesses rotational symmetry of order n, where n may be 3. The leaves or foils or blades of the wind-spinner shape may be mutually separated from each other in a rotational sense. Each leaf or foil or blade may be comprised of a sector of the first cell, and two mutually adjacent sectors of different second cells, in total comprising three sectors.

The wind-spinner shape and the cells, and their sectors are shown as regular shapes in the enclosed Figures, although it will be understood that this is merely a preferred network model. Other non-regular shaped network models and real life networks with other shapes or combinations of shapes are within the scope of the invention.

In a further implementation form of the first aspect, the decoding module is configured to send, e.g. over a backhaul connection, information representing a decoded message back to the secondary base station that sent the information representing the message to the decoding module.

A second aspect of the present invention provides a primary base station incorporating the decoding module according to the first aspect or any of its implementation forms, wherein the primary base station is configured to receive the information from the secondary base stations over backhaul links.

The primary base station is accordingly configured to carry out the joint decoding of the messages, and achieves an optimized performance due to the reduced interference.

Another aspect of the present invention provides a network comprising a plurality of base stations, each base station serving a cell and each cell being partitioned into a plurality of sectors, wherein the plurality of base stations comprise a primary base station for serving a first cell and a plurality of secondary base stations each for serving a respective second cell adjacent to the first cell, each secondary base station is configured to send, to the primary base station, information representing at least one message originating from at least one terminal located in the respective second cell of the secondary base station in one specific sector adjacent to the first cell, and the primary base station is configured to jointly decode the information sent from the secondary base station and at least one message originating from at least one terminal located in the first cell.

The specific sectors of the second cells and the sectors of the first cell form a cluster of sectors. In a hexagonal cell layout this cluster has a wind-spinner shape. The selection of the sectors for the cluster leads to an improved decoding performance at the primary base station. By configuring the network this way, opportunistic choosing of sectors is also avoided.

In an implementation form of the fifth aspect, each cell is configured as a hexagonal cell and is partitioned, for example evenly, into three sectors, and the plurality of secondary base stations are six secondary base station serving six second cells adjacent to the first cell.

In a further implementation form of the fifth aspect, the cells of the network are arranged in a first direction, and a plurality of primary base stations are arranged in the first direction with a plurality of, in particular two, secondary base stations arranged between each two primary base stations.

In a further implementation form of the fifth aspect, the cells of the network are further arranged in a second direction, and a plurality of primary base stations are arranged in the second direction with at least one base station arranged between each two primary base stations.

The above implementation forms enable a partitioning of the network cell layout into clusters that lead to an improved decoding performance. In a hexagonal cell layout, wind-spinner shaped clusters can be distributed adjacently throughout the network cell layout.

Yet another aspect of the present invention provides a decoding method for a primary base station in a network comprising a plurality of base stations, each base station serving a cell and each cell being partitioned into a plurality of sectors, the primary base station serving a first cell and the method comprising receiving information from each of a plurality of secondary base stations each serving a respective second cell adjacent to the first cell, wherein the information is representative of at least one message originating from at least one terminal located in the respective second cell of a secondary base station in one specific sector adjacent to the first cell, and jointly decoding the information sent from the secondary base stations and at least one message originating from at least one terminal located in the first cell.

The information, which is jointly decoded, originates from terminals located in a cluster of sectors, and the cluster includes the sectors of the first cell and the specific sectors of the second cells adjacent to the first cell.

The specific sectors of the second cells in the cluster form disjoint pairs of adjacent sectors.

The method comprises sending information representing a decoded message back to the secondary base station that sent the information representing the message to the decoding module.

The method of the sixth aspect and its implementation forms achieves the same advantages and effects as the decoding module of the first aspect and its respective implementation forms.

A possible implementation of the present invention provides a computer program product comprising a program code for carrying out, when implemented on a processor, a method according to the sixth or the seventh aspect. The present invention may be performed on specially adapted or configured circuits or processors.

The computer program product accordingly enables achieving the same advantages and effects as described above for the methods of the sixth aspect or the seventh aspect, respectively. A computer program product according to the invention may also contain a program code for controlling a decoding module according to the first aspect, or a sending module according to the third aspect.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities.

Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present invention will be explained in the following description of specific embodiments in relation to the enclosed drawings, in which
- FIG. 1: shows a network according to an embodiment of the present invention with an arbitrary cell layout. Primary and secondary base stations are comprised in the network. A decoding module according to an embodiment of the present invention is shown in a primary base station, and a sending module according to an embodiment of the present invention is shown in a secondary base station.
- FIG. 2: shows a network according to an embodiment of the present invention with a hexagonal cell layout.
- FIG. 3: shows a network according to an embodiment of the present invention with a hexagonal cell layout.
- FIG. 4: shows a (wind-spinner shaped) cluster in a network according to an embodiment of the present invention with a hexagonal cell layout.
- FIG. 5: shows a flow diagram of steps performed by a primary base station or by a secondary base station, respectively, according to embodiments of the present invention.
- FIG. 6: shows an arrangement of cells and sectors in a network according to an embodiment of the present invention with a hexagonal cell layout.
- FIG. 7: shows a decoding method according to an embodiment of the present invention.
- FIG. 8: shows a sending method according to an embodiment of the present invention.
- FIG. 9: shows a comparison between the present invention and a conventional approach for rates per user on a Rayleigh fading channel.

### DETAILED DESCRIPTION OF EMBODIMENTS

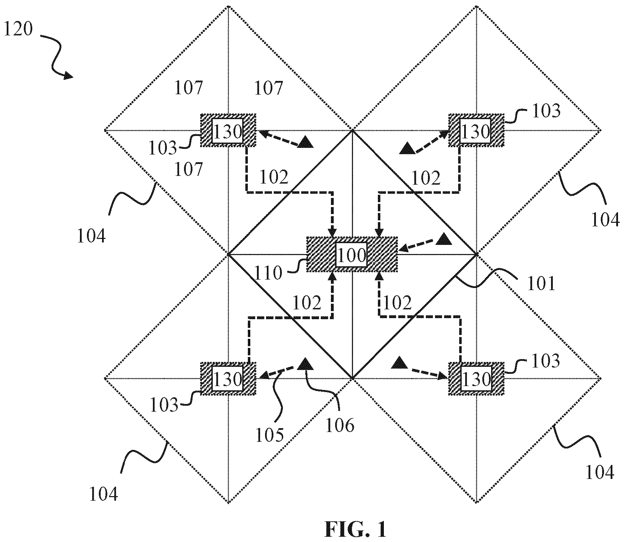

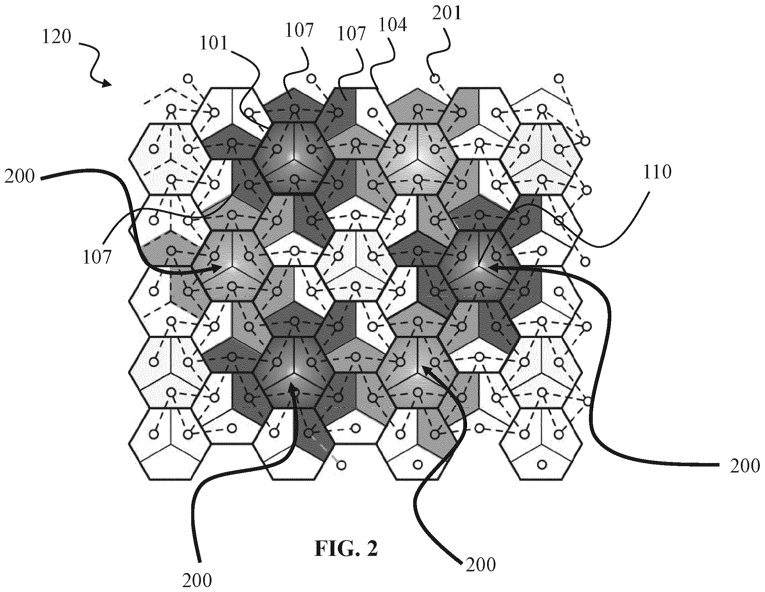

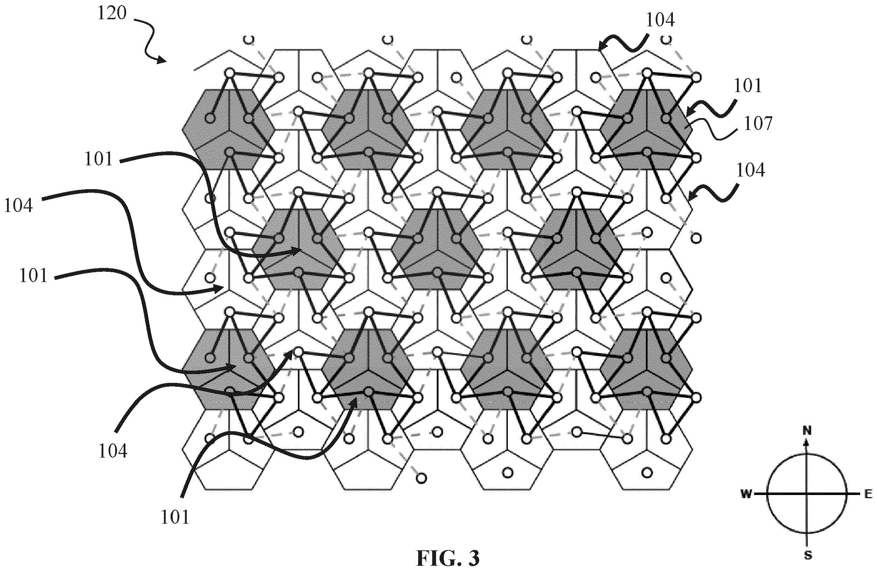

FIG. 1 shows a network 120 according to an embodiment of the present invention comprising a plurality of base stations (striped). In particular, FIG. 1 shows a primary base station 110 according to an embodiment of the present invention and four secondary base stations 103 according to embodiments of the present invention. Each base station serves a cell. The primary base station 110 serves a first cell 101, and each of the secondary base stations 103 serves a second cell 104. Each cell is partitioned into a plurality of sectors 107, and each cell has accordingly a certain model shape. In FIG. 1 the cell model layout is arbitrary - and just for general and non-limiting illustrational purposes each cell is shown to be divided into four sectors 107 and having a square shape. Notably, however, a preferred cell model for the network 120 is a hexagonal cell model, in which each cell is hexagonal and is divided in three sectors 107 (as shown in the following FIGs. 2, 3 4 and 6).

The primary base station 110 includes a decoding module 100 according to an embodiment of the present invention. The decoding module 100 is configured to receive information 102 from each of a plurality of secondary base stations 103 serving a respective second cell 104 adjacent to the first cell 101. The information 102 received from each secondary base station 103 is representative of at least one message 105 originating from at least one terminal 106 (terminals are indicated by black triangles) located in the respective second cell 104 of the secondary base station 103 in one (i.e. only one) specific sector 107 adjacent to the first cell 101. The information 102 may comprise one or more of the messages 105, or may be derived from at least one message 105, e.g. by quantization. The decoding module 100 is further configured to jointly decode the information 102 sent from the secondary base stations 103 together with at least one message 105 originating from at least one terminal 106 located in the first cell 101.

Each secondary base station 103 includes a sending module 130 according to an embodiment of the present invention. The sending module 130 is configured to send, to the primary base station 110 serving the first cell 101, the information 102 representative of the at least one message 105 originating from the at least one terminal 106 located in the second cell 104 in one (i.e. only one) specific sector 107 adjacent to the first cell 101.

In other words, considering the whole network 120, each secondary base station 103 is configured to send, to the primary base station 110, the information 102 related to a single determined sector 107 of its second cell 104, and the primary base station 110 is configured to jointly decode this information 102 together with at least one message 105 originating from a terminal 106 located in its first cell 101. The decoding performance of the primary base station 110 decoding the messages 105 and/or the information 102 indicative of the messages 105 is significantly improved compared to conventional joint decoding approaches.

FIG. 2 shows a network 120 according to a preferred embodiment of the present invention, which builds on the network 120 shown in FIG. 1. Same elements in FIG. 1 and FIG. 2 are labelled with the same reference signs and function likewise. In particular, FIG. 2 shows a hexagonal cellular network model, i.e. with hexagonal cells and with three sectors 107 per cell. Boundaries of the hexagonal cells are depicted in FIG. 2 with thicker lines, and boundaries of sectors 107 inside a cell are depicted with thinner lines. Interference links between sectors 107 are also depicted by dashed lines. Further, the following is exemplarily assumed for the network 120 of FIG. 2:
- Each cell contains one BS that is equipped with M ≥ 3 antennas 201.
- There is a group of M/3 antennas 201 of each BS pointing in each of the three sectors 107 of the cell of the BS.

In FIG. 2, the BS antennas 201 pointing to a given sector 107 are depicted with a small circle.
- Terminals 106 (i.e. mobile users) are present in the sectors 107, and wish to communicate data (i.e. send the messages 105) to the BS in their cell.
- Terminals 106 are equipped with M/3 antennas. They preferably use simple point-to-point codes to transmit their messages 105 to the BS.
- Messages 105 sent in neighboring sectors 107 interfere, unless the sectors 107 belong to the same cell. In FIG. 2, this interference is indicated by the dashed black lines between the antennas 201 indicated in the respective sectors 107.
- A channel from terminal 106 to BS is assumed to be a flat fading additive white Gaussian noise (AWGN).
- A channel matrix is not known at the terminals 106.
- The transmission of a terminal 106 is subject to input power constraint.

In FIG. 2 particularly different cluster 200 of sectors 107 are shown. In the hexagonal cell model shown in FIG. 2, wherein each cell is divided into three sectors 107, these clusters 200 take the form of "wind-spinners". Different such clusters 200 in FIG. 2 are depicted in different shades of gray or white, and master cells (i.e. first cells 101 that are served by a primary base station 110) are at the center of the clusters 200, where the first cell 101 is indicated with a lighter color. Within each cluster 200, all messages 105 originating from sectors 107 not pertaining to the first cell 101 are quantized (by a sending module 130 of a secondary base station 103), and are sent to the first cell 101, in which the decoding module 100 of the primary base station 110 jointly decodes all messages 105 in the sectors 107 of this cluster 200. Notably, interference from sectors 107 outside the clusters 200 is treated as noise.

The "wind-spinner" shape of the clusters 200 in the hexagonal cell layout of the network 120 shown in FIG. 2 is due to the following selection of sectors 107 for the cluster 200. Firstly, from each second cell 104, only one specific sector 107 belongs to a given cluster 200. Secondly, if a second cell 104 has two or more sectors 107 adjacent to the first cell 101, the specific sector 107 is one having a predetermined position relative to the other sectors 107 of the second cell 104 adjacent to the first cell 101. Thirdly, a cluster 200 includes the sectors 107 of the first cell 101 and the specific sectors 107 of all second cells 104 adjacent to the first cell 101. Fourthly, the specific sectors 107 of the second cells 104 in the cluster 200 form disjoint pairs of adjacent sectors 107.

FIG. 3 shows a network 120 according to an embodiment of the present invention, which builds on the network 120 shown in FIG. 2. Same elements in FIG. 2 and FIG. 3 are labeled with the same reference signs and function likewise.

Like in FIG. 2, also FIG. 3 illustrates the main ingredients of the invention in a cellular system, where cells have hexagonal shapes and are partitioned into three non-interfering sectors 107. The set of cells is partitioned into two kinds of sets: a set of first cells 101 (master cells) and a set of second cells 104 (ordinary cells). FIG. 3 depicts the first cells 101 in dark grey and second cells 104 in white. Any cell that is not a first cell 101 is a secondary cell 104.

In the vertical direction as indicated in FIG. 3 (here referred to as "S-N" direction") every third cell of the hexagonal cell model is a first cell 101, and the first cells 101 are chosen such that no two first cells 101 are adjacent to each other. Specifically, the cell of the network 120 are arranged in a first (S-N) direction, and a plurality of first cells 101 are arranged in the first direction with a plurality of, in particular two, second cells 104 arranged between each two first cells 101. Further, the cells of the network 120 are further arranged in a second direction (here a horizontal direction referred to as "E-W" direction), and a plurality of first cells 101 are arranged in the second direction with at least one first cell 101 and/or second 104 arranged between each two first cells 101.

A main ingredient of the invention is the definition of the clusters 200, and the choice of letting one specific primary base station 110 decode all messages 105 originating from a cluster 200. In particular, a cluster 200 is formed around each of the first cells 101 according to the following steps:
- Consider a first cell 101 and add all its three sectors 107 to the cluster 200.
- Add to the cluster 200 the three sectors 107 that are adjacent to two of the three sectors 107 of the first cell 101.
- Add to the cluster 200 the "south" sector 107 of the second cell 104 that is "north-west" of the first cell 101.
- Add to the cluster 200 the "north-west" sector 107 of the second cell 104 that is "north-east" of the first cell 101.
- Add to the cluster 200 the "north-east" sector 107 of the second cell 104 that is "south" of the first cell 101.

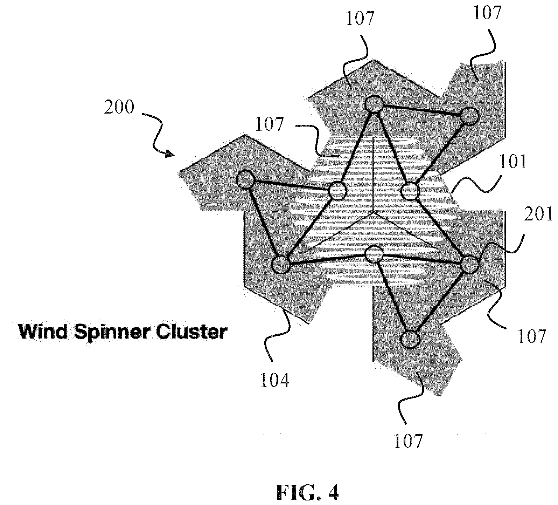

This yields a cluster 200 in the form of a wind-spinner as shown as in FIG. 4, where the first cell 101 is indicated with a white snake-like line. The sectors 107 of the cluster 200 of the different second cells 104 adjacent to the first cell 101 form "leaves" arranged around the first cell 101. It can be seen that the sectors 107 of the second cells 104 come in adjacent pairs. In total three disjoint pairs form the sectors 107 of the second cells 104.

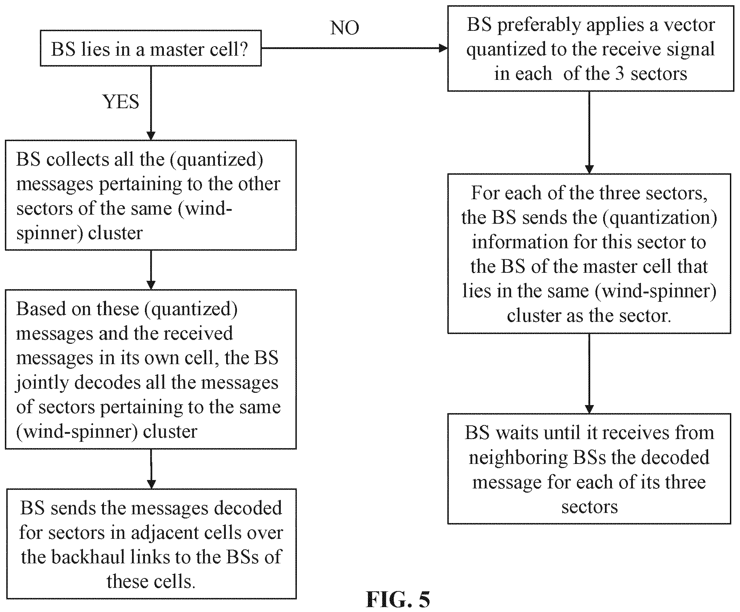

FIG. 5 shows a flow diagram of steps performed at a primary base station 110 of a first cell 101 or performed at a secondary base station 103 of a second cell 104.

In particular, if the base station of a cell is a primary base station 110 serving a first cell 101, it collects the information 102 preferably in the form of quantized messages 105 pertaining to the other sectors 107 of the same cluster 200. Based on the collected quantized messages 105 and on messages 105 received in the sectors 107 of its own first cell 101, it jointly decodes all the messages 105 of sectors 107 pertaining to the same cluster 200. Then, it sends the decoded messages 105 originating from second cells 104 back to the secondary base station 103, preferably over backhaul links.

If the base station of a cell is a secondary base station 103 serving a second cell 104, it sends preferably quantization information as the information 102 indicative of messages 105 received for its specific sector 107 to the primary base station 110 of the first cell 101 of the respective cluster 200. Then, it waits for its neighboring primary base stations 110 to decode the messages 105.

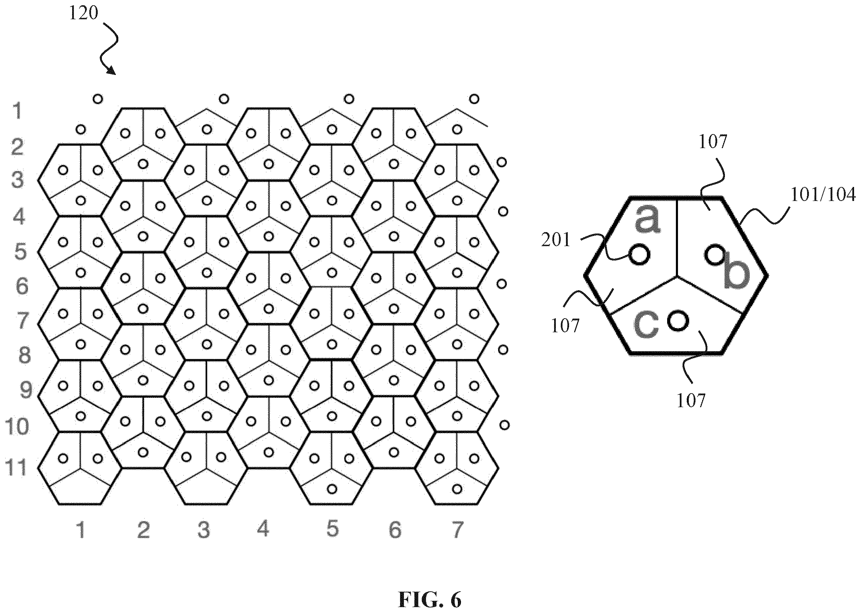

In the following, an exemplary embodiment according to the present invention is described in detail with respect to FIG. 6. FIG. 6 specifically shows a network 120 according to an embodiment of the present invention. Terminals 106 in the network 120 transmit their messages 105 using traditional multi-antenna point-to-point codes subject to an input power constraint. No channel state-information is required at the terminals 106. The decoding algorithm run at each of the various BSs 110, 103 of the network 102 depends on the position of the respective BS in the network 120.

In FIG. 6 a cell coordinate system (rows, columns) is used and the sector labels (a), (b), (c) are introduced. Cells, whose centers are in the rows 3, 6, 9, 12, 15, etc. are first cells 101. Cells, whose centers are in the rows 1, 2, 4, 5, 7, 8, 10, 11, etc. are second cells 104. Steps performed at the different BSs are now described, first for secondary base stations 103 serving second cells 104.
- For j=1, 7, 13, 19, 25, etc. and for 1 = 1, 3, 5, 7, 9, etc.:
The secondary base station 103 in the second cell 104 of row j and column l quantizes the outputs received at the M/3 antennas 201 of its sector (a) 107, and sends the quantization information over a backhaul link to the primary base station 110 of the first cell 101 in row j-1 and column 1-1. A Gaussian vector quantizer or a scalar quantizer is used for these quantization steps and for all following quantization steps.

The secondary base station 103 in the second cell 104 of row j and column l quantizes the outputs received at the M/3 antennas 201 of its sector (b) 107, and sends the quantization information over a backhaul link to the primary base station 110 of the first cell 101 in row j-1 and column l+1.

The secondary base station 103 in the second cell 104 of row j and column l quantizes the outputs received at the M/3 antennas 201 of its sector (c) 107, and sends the quantization information over a backhaul link to the primary base station 110 of the first cell 101 in row j+2 and column l.
- For j=2, 8, 14, 20, 26, etc. and for l = 2, 4, 6, 8, 10, etc.:
The secondary base station 103 in the second cell 104 of row j and column l quantizes the outputs received at the M/3 antennas 201 of its sector (a) 107, and sends the quantization information over a backhaul link to the primary base station 110 of the first cell 101 in row j+1 and column 1-1.

The secondary base station 103 in the second cell 104 of row j and column l quantizes the outputs received at the M/3 antennas 201 of its sector (b) 107, and sends the quantization information over a backhaul link to the primary base station 110 of the first cell 101 in row j-2 and column l.

The secondary base station 103 of the second cell 104 of row j and column l quantizes the outputs received at the M/3 antennas 201 of its sector (c) 107, and sends the quantization information over a backhaul link to the primary base station 110 of the first cell 101 in row j+1 and column l+1.
- For j=4, 10, 16, 22, 28, etc. and for l= 2, 4, 6, 8, 10, etc.:
The secondary base station 103 in the second cell 104 of row j and column l quantizes the outputs received at the M/3 antennas of its sector (a), and sends the quantization information over a backhaul link to the primary base station 110 of the first cell 101 in row j-1 and column l-1.

The secondary base station 103 in the second cell 104 of row j and column l quantizes the outputs received at the M/3 antennas of its sector (b), and sends the quantization information over a backhaul link to the primary base station 110 of the first cell 101 in row j-1 and column l+1.

The secondary base station 103 in the second cell 104 of row j and column l quantizes the outputs received at the M/3 antennas of its sector (c), and sends the quantization information over a backhaul link to the primary base station 110 of the first cell 101 in row j+2 and column l.
- For j=5, 11, 17, 23, 29, etc. and for l = 1, 3, 5, 7, 9, etc.:
The secondary base station 103 in the second cell 104 of row j and column l quantizes the outputs received at the M/3 antennas of its sector (a), and sends the quantization information over a backhaul link to the primary base station 110 of the first cell 101 in row j+1 and column 1-1.

The secondary base station 103 in the second cell 104 of row j and column l quantizes the outputs received at the M/3 antennas of its sector (b), and sends the quantization information over a backhaul link to the primary base station 110 of the first cell 101 in row j-2 and column l.

The secondary base station 103 in the second cell 104 of row j and column l quantizes the outputs received at the M/3 antennas of its sector (c), and sends the quantization information over a backhaul link to the primary base station 110 of the first cell 101 in row j+1 and column l+1.

The secondary base stations 103 of the second cells 104 that lie in the rows 1, 2, 4, 5, 7, 8, 10, 11, 13, 14, etc. then wait until their neighboring primary base stations 110 have decoded their intended messages 105, and inform them about the results over the backhaul links.

Next are described the decoding operations at the primary base station 110 of the first cells 101.
- For j=3, 6, 9, 12, 15, 18, 21, etc. and for l = 1, 3, 5, 7, 9, etc.:
-

The primary base station 110 in the first cell 101 of row j and column l performs the following steps: it uses the 6 pieces of quantization information received from its 6 neighboring secondary base stations 103 over the backhaul link to reconstruct quantized versions of the messages 105 received at the M/3 antennas 201 of the sector (a) 107 of the two second cells 104 in rows j-1 and j+1 and column l+1, the sector (b) 107 of the second cell 104 in row j+1 and column l-1 and the second cell 104 in row j+2 and column l, and the sector (c) 107 of the second cell 104 in row j-1 and column l-1 and the second cell 104 in row j-2 and column l.

The primary base station 110 then uses these reconstructed quantized signals and the outputs at the 3M antennas 201 of its own first cell 101, to jointly decode the messages 105 sent in the sectors (a), (b), (c) of its own first cell 101 and the messages 105 sent in the 6 sectors 107 of the second cells 104 described above. Then, it sends the messages 105 decoded for the sectors of adjacent second cells 104 over the backhaul links back to the secondary base stations 103 of these adjacent second cells 104.

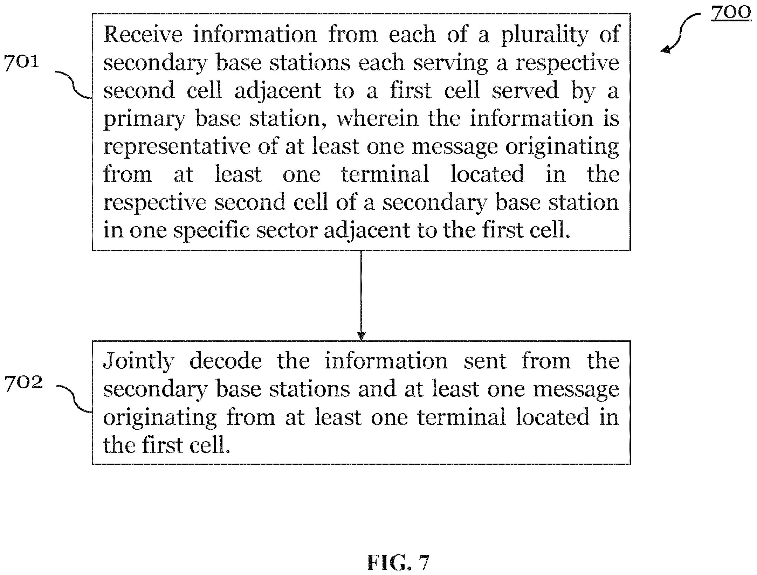

FIG. 7 shows a decoding method 700 according to an embodiment of the present invention. The method 700 may be carried out by a decoding module of a base station (e.g. the decoding module 100 shown in FIG. 1) or by a primary base station 110. The method 700 includes, for a primary base station 110 in a network 120 comprising a plurality of base stations, each base station serving a cell and each cell being partitioned into a plurality of sectors, the primary base station serving a first cell: receiving 701 information 102 from each of a plurality of secondary base stations 103 each serving a respective second cell 104 adjacent to the first cell 101, wherein the information 102 is representative of at least one message 105 originating from at least one terminal 106 located in the respective second cell 104 of a secondary base station 103 in one specific sector 107 adjacent to the first cell 101, and jointly decoding 702 the information 102 sent from the secondary base stations 103 and at least one message 105 originating from at least one terminal 106 located in the first cell 101.

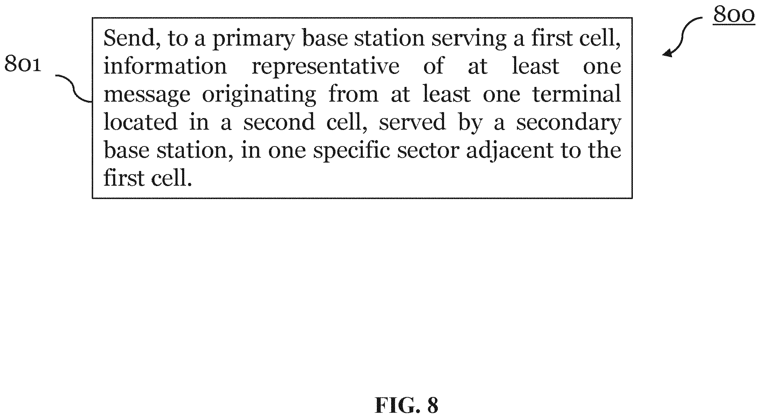

FIG. 8 shows a sending method according to an embodiment of the present invention. The method may be carried out by a sending module of a base station (e.g. the sending module 130 shown in FIG. 2) or by a secondary base station 103. The method 800 includes, for a secondary base station 103) in a network 120 including a plurality of base stations, each base station serving a cell and each cell being partitioned into a plurality of sectors, the secondary base station serving a second cell: sending 801 to a primary base station 110 serving a first cell 101, information 102 representative of at least one message 105 originating from at least one terminal 106 located in the second cell 104 in one specific sector 107 adjacent to the first cell 101.

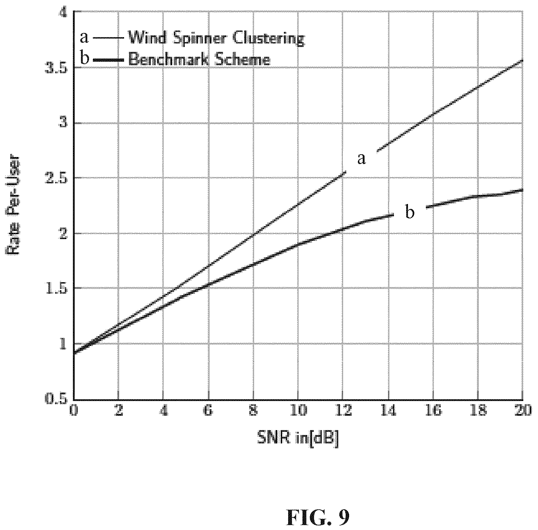

In the following, a numerical comparison on a Rayleigh Fading Channel is presented with respect to FIG. 9. In particular, the rates achieved with the new wind-spinner clustering approach described above are numerically compared to the rates achieved by the "opportunistic 3-best sectors" approach currently used in practice (referred to as benchmark scheme). Improvements are important at moderate and high SNR, because the wind-spinner clustering approach of the present invention allows reducing the inter-cluster interference (which is treated as noise) that stems from terminals 106 in sectors 107 pertaining to different clusters 200. The simulation in FIG. 9 is based on the following assumptions:
- Channel gain from a terminal 106 to a BS in the same cell is deterministically 1.
- Channel gains from a terminal 106 to a BS in an adjacent cell is independent standard Gaussian multiplied with the pathloss factor a. In the simulation shown in FIG. 9 the pathloss factor is a=0.6.
- Signals are vector-quantized to noise level. This holds both for the benchmark scheme as well as for the wind-spinner clustering approach.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

The scope of the invention is only defined by the appended claims.

## Claims

1. Decoding module (100) for a primary base station (110) in a network (120) comprising a plurality of base stations (110, 103), each base station (110, 103) serving a cell (101, 104) and each cell (101, 104) being partitioned into a plurality of sectors (107), the primary base station (110) serving a first cell (101) and the decoding module (100) being configured to
receive information (102) from each of a plurality of secondary base stations (103) each serving a respective second cell (104) adjacent to the first cell (101),
wherein the information (102) is representative of at least one message (105) originating from at least one terminal (106) located in the respective second cell (104) of a secondary base station (103) in one specific sector (107) adjacent to the first cell (101), and
jointly decode the information (102) sent from the secondary base stations (103) and at least one message (105) originating from at least one terminal (106) located in the first cell (101), wherein
the information (102), which the decoding module (100) is configured to jointly decode, originates from terminals (106) located in a cluster (200) of sectors (107), and
the cluster (200) includes the sectors (107) of the first cell (101) and the specific sectors (107) of the respective second cells (104) adjacent to the first cell (101), **characterised in that**
if a respective second cell (104) has two or more sectors (107) adjacent to the first cell (101), the one specific sector (107) adjacent to the first cell (101) has a predetermined position relative to the other sectors (107) of the respective second cell (104) adjacent to the first cell (101), and wherein
the specific sectors (107) of the respective second cells (104) in the cluster (200) form disjoint pairs of adjacent sectors (107).

2. Decoding module (100) according to the claim 1, wherein
the decoding module (100) is configured to send information representing a decoded message back to the secondary base station that sent the information representing the message to the decoding module.

3. A primary base station (110) incorporating the decoding module (100) according to claim 1 or 2, wherein
the primary base station (110) is configured to receive the information (102) from the secondary base stations (103) over backhaul links.

4. Network (120) comprising a plurality of base stations (110, 103), each base station (110, 103) serving a cell (101, 104) and each cell (101, 104) being partitioned into a plurality of sectors (107), wherein
the plurality of base stations (110, 103) comprise a primary base station (110) for serving a first cell (101) and a plurality of secondary base stations (103) each for serving a respective second cell (104) adjacent to the first cell (101),
each secondary base station (103) is configured to send, to the primary base station (110), information (102) representing at least one message (105) originating from at least one terminal (106) located in the respective second cell (104) of the secondary base station (103) in one specific sector (107) adjacent to the first cell (101), and
the primary base station (110) is configured to jointly decode the information (102) sent from the secondary base station (103) and at least one message (105) originating from at least one terminal (106) located in the first cell (101), wherein the information (102), which the primary base station (110) is configured to jointly decode, originates from terminals (106) located in a cluster (200) of sectors (107), and
the specific sectors (107) of the respective second cells (104) and the sectors of the first cell (101) form the cluster of sectors (200), **characterised in that**
if a respective second cell (104) has two or more sectors (107) adjacent to the first cell (101), the one specific sector (107) adjacent to the first cell (101) has a predetermined position relative to the other sectors (107) of the respective second cell (104) adjacent to the first cell (101), and wherein the specific sectors (107) of the respective second cells (104) in the cluster (200) form disjoint pairs of adjacent sectors (107).

5. Network (120) according to claim 4, wherein
each cell (101, 104) is configured as a hexagonal cell and is partitioned into three sectors (107), and
the plurality of secondary base stations (103) are six secondary base station (103) serving six second cells (104) adjacent to the first cell (101).

6. Network (120) according to claim 4 or 5, wherein
the cells (101, 104) of the network (120) are arranged in a first direction, and
a plurality of primary base stations (110) are arranged in the first direction with a plurality of, in particular two, secondary base stations (103) arranged between each two primary base stations (110).

7. Network (120) according to claim 6, wherein
the cells (101, 104) of the network (120) are further arranged in a second direction, and
a plurality of primary base stations (110) are arranged in the second direction with at least one base station (110, 103) arranged between each two primary base stations (110).

8. Decoding method (700) for a primary base station (110) in a network (120) comprising a plurality of base stations (110, 103), each base station (110, 103) serving a cell (101, 104) and each cell (101, 104) being partitioned into a plurality of sectors (107), the primary base station (110) serving a first cell (101) and the method (700) comprising
receiving (701) information (102) from each of a plurality of secondary base stations (103) each serving a respective second cell (104) adjacent to the first cell (101),
wherein the information (102) is representative of at least one message (105) originating from at least one terminal (106) located in the respective second cell (104) of a secondary base station (103) in one specific sector (107) adjacent to the first cell (101), and
jointly decoding (702) the information (102) sent from the secondary base stations (103) and at least one message (105) originating from at least one terminal (106) located in the first cell (101) , wherein
the information (102), which jointly decoded, originates from terminals (106) located in a cluster (200) of sectors (107), and
the cluster (200) includes the sectors (107) of the first cell (101) and the specific sectors (107) of the respective second cells (104) adjacent to the first cell (101), **characterised in that**
if a respective second cell (104) has two or more sectors (107) adjacent to the first cell (101), the one specific sector (107) adjacent to the first cell (101) has a predetermined position relative to the other sectors (107) of the respective second cell (104) adjacent to the first cell (101), and wherein the specific sectors (107) of the respective second cells (104) in the cluster (200) form disjoint pairs of adjacent sectors (107).

## Patentansprüche

1. Decodiermodul (100) für eine primäre Basisstation (110) in einem Netzwerk (120), das eine Vielzahl von Basisstationen (110, 103) umfasst, wobei jede Basisstation (110, 103) eine Zelle (101, 104) bedient und jede Zelle (101, 104) in eine Vielzahl von Sektoren (107) unterteilt ist, wobei die primäre Basisstation (110) eine erste Zelle (101) bedient und das Decodiermodul (100) konfiguriert ist zum
Empfangen von Informationen (102) von jeder einer Vielzahl von sekundären Basisstationen (103), die jeweils eine jeweilige zweite Zelle (104) angrenzend an der ersten Zelle (101) bedienen,
wobei die Informationen (102) mindestens eine Nachricht (105) darstellen, die von mindestens einem Endgerät (106), das sich in der jeweiligen zweiten Zelle (104) einer sekundären Basisstation (103) in einem bestimmten Sektor (107) angrenzend an der ersten Zelle (101) befindet, stammt, und
gemeinsames Decodieren der Informationen (102), die von den sekundären Basisstationen (103) gesendet werden, und mindestens einer Nachricht (105), die von mindestens einem Endgerät (106), das sich in der ersten Zelle (101) befindet, stammt, wobei
die Informationen (102), für die das Decodiermodul (100) konfiguriert ist, um sie gemeinsam zu decodieren, von Endgeräten (106), die sich in einem Cluster (200) von Sektoren (107) befinden, stammen, und
der Cluster (200) die Sektoren (107) der ersten Zelle (101) und die bestimmten Sektoren (107) der jeweiligen zweiten Zellen (104) angrenzend an der ersten Zelle (101) einschließt, **dadurch gekennzeichnet, dass**
falls eine jeweilige zweite Zelle (104) zwei oder mehr Sektoren (107) angrenzend an der ersten Zelle (101) aufweist, der eine bestimmte Sektor (107) angrenzend an der ersten Zelle (101) eine vorgegebene Position relativ zu den anderen Sektoren (107) der jeweiligen zweiten Zelle (104) angrenzend an der ersten Zelle (101) aufweist, und wobei die bestimmten Sektoren (107) der jeweiligen zweiten Zellen (104) in dem Cluster (200) disjunkte Paare angrenzender Sektoren (107) bilden.

2. Decodiermodul (100) nach Anspruch 1, wobei
das Decodiermodul (100) konfiguriert ist, um Informationen, die eine decodierte Nachricht darstellen, an die sekundäre Basisstation, die die Informationen, die die Nachricht darstellen, an das Decodiermodul gesendet hat, zurückzusenden.

3. Primäre Basisstation (110), die das Decodiermodul (100) nach Anspruch 1 oder 2 enthält, wobei
die primäre Basisstation (110) konfiguriert ist, um die Informationen (102) von den sekundären Basisstationen (103) über Backhaul-Verbindungen zu empfangen.

4. Netzwerk (120), das eine Vielzahl von Basisstationen (110, 103) umfasst, wobei jede Basisstation (110, 103) eine Zelle (101, 104) bedient und jede Zelle (101, 104) in eine Vielzahl von Sektoren (107) unterteilt ist, wobei
die Vielzahl von Basisstationen (110, 103) eine primäre Basisstation (110) zum Bedienen einer ersten Zelle (101) und eine Vielzahl von sekundären Basisstationen (103), von denen jede zum Bedienen einer jeweiligen zweiten Zelle (104) angrenzend an der ersten Zelle (101) dient, umfasst,
jede sekundäre Basisstation (103) konfiguriert ist, um, an die primäre Basisstation (110), Informationen (102), die mindestens eine Nachricht (105) darstellen, die von mindestens einem Endgerät (106), das sich in der jeweiligen zweiten Zelle (104) der sekundären Basisstation (103) in einem bestimmten Sektor (107) angrenzend an der ersten Zelle (101) befindet, stammt, zu senden, und
die primäre Basisstation (110) konfiguriert ist, um die Informationen (102), die von der sekundären Basisstation (103) gesendet werden, und mindestens eine Nachricht (105), die von mindestens einem Endgerät (106), das sich in der ersten Zelle (101) befindet, stammt, gemeinsam zu decodieren, wobei die Informationen (102), für die die primäre Basisstation (110) konfiguriert ist, um sie gemeinsam zu decodieren, von Endgeräten (106), die sich in einem Cluster (200) von Sektoren (107) befinden, stammen, und
die bestimmten Sektoren (107) der jeweiligen zweiten Zellen (104) und die Sektoren der ersten Zelle (101) den Cluster von Sektoren (200) bilden, **dadurch gekennzeichnet, dass**
falls eine jeweilige zweite Zelle (104) zwei oder mehr Sektoren (107) angrenzend an der ersten Zelle (101) aufweist, der eine bestimmte Sektor (107) angrenzend an der ersten Zelle (101) eine vorgegebene Position relativ zu den anderen Sektoren (107) der jeweiligen zweiten Zelle (104) angrenzend an der ersten Zelle (101) aufweist, und wobei die bestimmten Sektoren (107) der jeweiligen zweiten Zellen (104) in dem Cluster (200) disjunkte Paare angrenzender Sektoren (107) bilden.

5. Netzwerk (120) nach Anspruch 4, wobei
jede Zelle (101, 104) als eine hexagonale Zelle gebildet ist und in drei Sektoren (107) unterteilt ist, und
die Vielzahl von sekundären Basisstationen (103) aus sechs sekundären Basisstationen (103) bestehen, die sechs zweite Zellen (104) angrenzend an der ersten Zelle (101) bedienen.

6. Netzwerk (120) nach Anspruch 4 oder 5, wobei
die Zellen (101, 104) des Netzwerks (120) in einer ersten Richtung angeordnet sind, und eine Vielzahl von primären Basisstationen (110) in der ersten Richtung angeordnet sind, wobei eine Vielzahl von, insbesondere zwei, sekundären Basisstationen (103) zwischen jeweils zwei primären Basisstationen (110) angeordnet sind.

7. Netzwerk (120) nach Anspruch 6, wobei
die Zellen (101, 104) des Netzwerks (120) ferner in einer zweiten Richtung angeordnet sind, und
eine Vielzahl von primären Basisstationen (110) in der zweiten Richtung angeordnet sind, wobei mindestens eine Basisstation (110, 103) zwischen jeweils zwei primären Basisstationen (110) angeordnet ist.

8. Decodierverfahren (700) für eine primäre Basisstation (110) in einem Netzwerk (120), das eine Vielzahl von Basisstationen (110, 103) umfasst, wobei jede Basisstation (110, 103) eine Zelle (101, 104) bedient und jede Zelle (101, 104) in eine Vielzahl von Sektoren (107) unterteilt ist, wobei die primäre Basisstation (110) eine erste Zelle (101) bedient und das Verfahren (700) umfasst Empfangen (701) von Informationen (102) von jeder einer Vielzahl von sekundären Basisstationen (103), die jeweils eine jeweilige zweite Zelle (104) angrenzend an der ersten Zelle (101) bedienen,
wobei die Informationen (102) mindestens eine Nachricht (105) darstellen, die von mindestens einem Endgerät (106), das sich in der jeweiligen zweiten Zelle (104) einer sekundären Basisstation (103) in einem bestimmten Sektor (107) angrenzend an der ersten Zelle (101) befindet, stammt, und
gemeinsames Decodieren (702) der Informationen (102), die von den sekundären Basisstationen (103) gesendet werden, und mindestens einer Nachricht (105), die von mindestens einem Endgerät (106), das sich in der ersten Zelle (101) befindet, stammt, wobei
die Informationen (102), die gemeinsam decodiert sind, von Endgeräten (106), die sich in einem Cluster (200) von Sektoren (107) befinden, stammen, und
der Cluster (200) die Sektoren (107) der ersten Zelle (101) und die bestimmten Sektoren (107) der jeweiligen zweiten Zellen (104) angrenzend an der ersten Zelle (101) einschließt, **dadurch gekennzeichnet, dass**
falls eine jeweilige zweite Zelle (104) zwei oder mehr Sektoren (107) angrenzend an der ersten Zelle (101) aufweist, der eine bestimmte Sektor (107) angrenzend an der ersten Zelle (101) eine vorgegebene Position relativ zu den anderen Sektoren (107) der jeweiligen zweiten Zelle (104) angrenzend an der ersten Zelle (101) aufweist, und wobei die bestimmten Sektoren (107) der jeweiligen zweiten Zellen (104) in dem Cluster (200) disjunkte Paare angrenzender Sektoren (107) bilden.

## Revendications

1. Module de décodage (100) pour une station de base primaire (110) dans un réseau (120) comprenant une pluralité de stations de base (110, 103), chaque station de base (110, 103) desservant une cellule (101, 104) et chaque cellule (101, 104) étant divisée en une pluralité de secteurs (107), la station de base primaire (110) desservant une première cellule (101) et le module de décodage (100) étant configuré pour
recevoir des informations (102) de chacune d'une pluralité de stations de base secondaires (103) desservant chacune une seconde cellule (104) respective adjacente à la première cellule (101),
dans lequel les informations (102) sont représentatives d'au moins un message (105) provenant d'au moins un terminal (106) situé dans la seconde cellule (104) respective d'une station de base secondaire (103) dans un secteur (107) spécifique adjacent à la première cellule (101), et
décoder conjointement les informations (102) envoyées par les stations de base secondaires (103) et au moins un message (105) provenant d'au moins un terminal (106) situé dans la première cellule (101), dans lequel les informations (102), que le module de décodage (100) est configuré pour décoder conjointement, proviennent de terminaux (106) situés dans un groupe (200) de secteurs (107), et
le groupe (200) comporte les secteurs (107) de la première cellule (101) et les secteurs (107) spécifiques des secondes cellules (104) respectives adjacentes à la première cellule (101), **caractérisé en ce que**
si une seconde cellule (104) respective a deux secteurs (107) ou plus adjacents à la première cellule (101), le secteur (107) spécifique adjacent à la première cellule (101) a une position prédéterminée par rapport aux autres secteurs (107) de la seconde cellule (104) respective adjacente à la première cellule (101), et dans lequel les secteurs (107) spécifiques des secondes cellules (104) respectives du groupe (200) forment des paires disjointes de secteurs (107) adjacents.

2. Module de décodage (100) selon la revendication 1, dans lequel le module de décodage (100) est configuré pour renvoyer des informations représentant un message décodé à la station de base secondaire qui a envoyé les informations représentant le message au module de décodage.

3. Station de base primaire (110) incorporant le module de décodage (100) selon la revendication 1 ou 2, dans laquelle
la station de base primaire (110) est configurée pour recevoir les informations (102) des stations de base secondaires (103) par l'intermédiaire de liaisons terrestres.

4. Réseau (120) comprenant une pluralité de stations de base (110, 103), chaque station de base (110, 103) desservant une cellule (101, 104) et chaque cellule (101, 104) étant divisée en une pluralité de secteurs (107), dans lequel
la pluralité de stations de base (110, 103) comprend une station de base primaire (110) pour desservir une première cellule (101) et une pluralité de stations de base secondaires (103) desservant chacune une seconde cellule (104) respective adjacente à la première cellule (101),
chaque station de base secondaire (103) est configurée pour envoyer à la station de base primaire (110) des informations (102) représentant au moins un message (105) provenant d'au moins un terminal (106) situé dans la seconde cellule (104) respective de la station de base secondaire (103) dans un secteur (107) spécifique adjacent à la première cellule (101), et
la station de base primaire (110) est configurée pour décoder conjointement les informations (102) envoyées par la station de base secondaire (103) et au moins un message (105) provenant d'au moins un terminal (106) situé dans la première cellule (101), dans lequel les informations (102), que la station de base primaire (110) est configurée pour décoder conjointement, proviennent de terminaux (106) situés dans une grappe (200) de secteurs (107), et
les secteurs (107) spécifiques des secondes cellules (104) respectives et les secteurs de la première cellule (101) forment le groupe de secteurs (200), **caractérisé en ce que** si une seconde cellule (104) respective a deux secteurs (107) ou plus adjacents à la première cellule (101), le secteur (107) spécifique adjacent à la première cellule (101) a une position prédéterminée par rapport aux autres secteurs (107) de la seconde cellule (104) respective adjacente à la première cellule (101), et dans lequel les secteurs (107) spécifiques des secondes cellules (104) respectives dans le groupe (200) forment des paires disjointes de secteurs (107) adjacents.

5. Réseau (120) selon la revendication 4, dans lequel
chaque cellule (101, 104) est configurée comme une cellule hexagonale et est divisée en trois secteurs (107), et
la pluralité de stations de base secondaires (103) sont six stations de base secondaires (103) desservant six secondes cellules (104) adjacentes à la première cellule (101).

6. Réseau (120) selon la revendication 4 ou 5, dans lequel
les cellules (101, 104) du réseau (120) sont disposées dans une première direction, et une pluralité de stations de base primaires (110) sont disposées dans la première direction avec une pluralité de stations de base secondaires (103), en particulier deux, disposées entre chaque deux stations de base primaires (110).

7. Réseau (120) selon la revendication 6, dans lequel
les cellules (101, 104) du réseau (120) sont disposées en outre dans une seconde direction, et
une pluralité de stations de base primaires (110) sont disposées dans la seconde direction, avec au moins une station de base (110, 103) disposée entre chaque deux stations de base primaires (110).

8. Procédé de décodage (700) pour une station de base primaire (110) dans un réseau (120) comprenant une pluralité de stations de base (110, 103), chaque station de base (110, 103) desservant une cellule (101, 104) et chaque cellule (101, 104) étant divisée en une pluralité de secteurs (107), la station de base primaire (110) desservant une première cellule (101) et le procédé (700) comprenant la réception (701) d'informations (102) de chacune d'une pluralité de stations de base secondaires (103) desservant chacune une seconde cellule (104) respective adjacente à la première cellule (101),
dans lequel les informations (102) sont représentatives d'au moins un message (105) provenant d'au moins un terminal (106) situé dans la seconde cellule (104) respective d'une station de base secondaire (103) dans un secteur (107) spécifique adjacent à la première cellule (101), et
le décodage (702) conjoint des informations (102) envoyées par les stations de base secondaires (103) et d'au moins un message (105) provenant d'au moins un terminal (106) situé dans la première cellule (101), dans lequel les informations (102), décodées conjointement, proviennent de terminaux (106) situés dans un groupe (200) de secteurs (107), et
le groupe (200) comporte les secteurs (107) de la première cellule (101) et les secteurs (107) spécifiques des secondes cellules (104) respectives adjacentes à la première cellule (101), **caractérisé en ce que**
si une seconde cellule (104) respective a deux secteurs (107) ou plus adjacents à la première cellule (101), le secteur (107) spécifique adjacent à la première cellule (101) a une position prédéterminée par rapport aux autres secteurs (107) de la seconde cellule (104) respective adjacente à la première cellule (101), et dans lequel les secteurs (107) spécifiques des secondes cellules (104) respectives dans le groupe (200) forment des paires disjointes de secteurs (107) adjacents.
